# EUROPEAN PATENT APPLICATION

(11) **EP 4 245 498 A1**
(43) Date of publication of application: **20.09.2023**
(21) Application number: 21891657.5
(22) Date of filing: 27.10.2021
(51) Int. Cl.: B29C 39/10, B29K 105/04, B29K 105/08, B32B 5/24, B32B 5/26, B32B 5/32, B62D 25/18, G10K 11/168, B29C 44/00, B29C 44/12

(54) **FENDER LINER AND MANUFACTURING METHOD THEREOF, AND VEHICLE**

(30) Priority: 11.11.2020 JP 2020188140
(71) Applicant: AGC INC., Chiyoda-ku, Tokyo 1008405 (JP)
(72) Inventor: SHIMOSAKA, Takamichi, Tokyo 100-8405 (JP); TAKADA, Takashi, Tokyo 100-8405 (JP); KODAMA, Kotaro, Tokyo 100-8405 (JP); FUJIWARA, Yukihiro, Tokyo 100-8405 (JP)
(74) Representative: Müller-Boré & Partner Patentanwälte PartG mbB
(86) International application number: PCT/JP2021/039703
(87) International publication number: WO 2022/102410

(57) **Abstract**

A fender liner that is to be placed in a curved shape along a periphery of a tire of a vehicle includes:
a first foam layer that is formed by a first foam body; and
a mixed layer that includes a first non-woven fabric and a second foam body that is foamed inside the first non-woven fabric,
wherein the first foam body forming the first foam layer is seamless with the second foam body included in the mixed layer.

## Description

### TECHNICAL FIELD

The disclosures herein relate to a fender liner, a manufacturing method of the fender liner, and a vehicle.

### BACKGROUND ART

A fender liner is placed in a curved shape along a periphery of a tire of a vehicle and prevents debris such as pebbles that get kicked up while a vehicle is traveling from colliding with the vehicle (hereinafter, also referred to as chipping). Further, the fender liner includes a non-woven fabric and the like and absorbs travel noise of the vehicle, collision noise of debris, and the like (see Patent Document 1, for example).

### RELATED-ART DOCUMENTS

### PATENT DOCUMENTS

Patent Document 1: Japanese Unexamined Patent Application Publication No. 2015-17339

### SUMMARY OF THE INVENTION

### PROBLEM TO BE SOLVED BY THE INVENTION

Conventional fender liners include non-woven fabric and the like.

It is conceivable to use foam layer instead of the non-woven fabric. The foam layer is superior to the non-woven fabric in terms of sound absorption performance, shape retention, and the like, but is inferior in terms of strength.

One aspect of the present disclosure provides a technique for enhancing the strength of the fender liner that includes a foam layer.

### MEANS TO SOLVE THE PROBLEM

A fender liner that is to be placed in a curved shape along a periphery of a tire of a vehicle according to one aspect of the present disclosure includes:
a first foam layer that is formed by a first foam body; and
a mixed layer that includes a first non-woven fabric and a second foam body that is foamed inside the first non-woven fabric,
wherein the first foam body forming the first foam layer is seamless with the second foam body included in the mixed layer.

### EFFECTS OF THE INVENTION

According to one aspect of the disclosure, the foam layer of the fender liner can be reinforced with the mixed layer to enhance the strength of the fender liner.

### BRIEF DESCRIPTION OF THE DRAWINGS

[FIG. 1] FIG. 1 illustrates a lower structure of a vehicle to which a fender liner according to an embodiment is installed;
[FIG. 2(A)] FIG. 2(A) is a cross-sectional view of a laminated structure according to an embodiment;
[FIG. 2(B)] FIG. 2(B) is a cross-sectional view of a laminated structure of a first variation;
[FIG. 2(C)] FIG. 2(C) is a cross-sectional view of a laminated structure of a second variation;
[FIG. 3] FIG. 3 is a flowchart illustrating a method of manufacturing a fender liner according to an embodiment;
[FIG. 4] FIG. 4 is a cross-sectional view of an example of step S102 of FIG. 3;
[FIG. 5] FIG. 5 is a cross-sectional view of an example of step S105 of FIG. 3;
[FIG. 6] FIG. 6 is a cross-sectional view of an example of step S106 of FIG. 3;
[FIG. 7] FIG. 7 is a diagram illustrating an example of the relationship between surface density and tensile strength;
[FIG. 8] FIG. 8 is a diagram illustrating an example of the relationship between a thickness of the non-woven fabric and the strength enhancement rate A prior to composite formation; and
[FIG. 9] FIG. 9 is a diagram illustrating an example of the relationship between the thickness of the non-woven fabric and the strength enhancement rate B prior to composite formation.

### MODE FOR CARRYING OUT THE INVENTION

In the following, embodiments of the disclosure are described with reference to the drawings. Throughout the drawings, the same elements are assigned the same reference numerals and duplicated descriptions may be omitted. Also, in this specification, a numerical range expressed using "to" includes the lower limit value and the upper limit value before and after "to". The non-woven fabric is defined in the Japanese Industrial Standard, JIS L 0222:2001, as "a sheet, a web, or batt of fiber in which fibers are oriented unidirectionally or randomly and bonded with each other by entanglement, fusion, adhesion, or any combination thereof; excluding paper, woven fabric, knitted fabric, tufted fabric, and fulled felt".

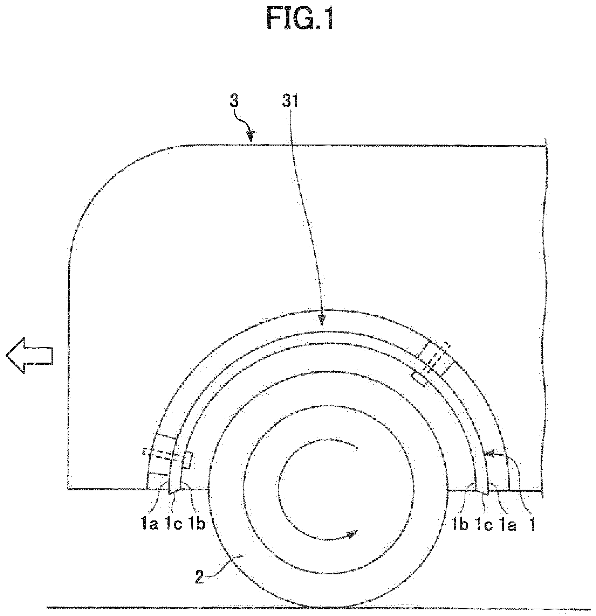

First, a fender liner 1 according to an embodiment is described with reference to FIG. 1. In FIG. 1, the outlined arrow indicates the direction in which the vehicle is moving in, the left side is the front of the vehicle, and the right side is towards the rear of the vehicle.

The fender liner 1 is placed inside a tire house 31. The tire house 31 is a space in which a tire 2 of a vehicle body 3 is accommodated. The fender liner 1 is placed in a curved shape along the periphery of the tire 2. The fender liner 1 forms a gap between the fender liner 1 and the tire 2. The gap is greater than or equal to a predetermined gap, and thus the fender liner 1 and the tire 2 can be prevented from coming into contact with each other.

The fender liner 1 prevents debris such as pebbles that get kicked up while the vehicle is traveling from colliding with the vehicle body 3. Also, the fender liner 1 absorbs travel noise of the vehicle, collision noise of debris, and the like. The fender liner 1 is attached to the vehicle body 3 by, for example, pins and washers.

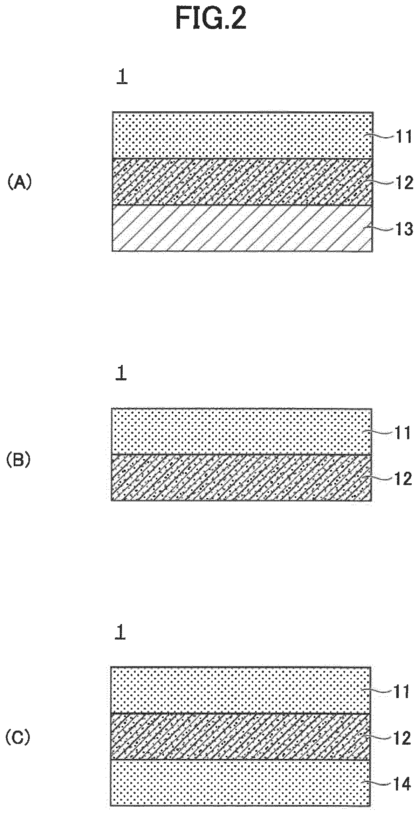

As illustrated in FIG. 2(A), the fender liner 1 includes at least a first foam layer 11 and a mixed layer 12. Each of the first foam layer 11 and the mixed layer 12 is formed in a curved shape along the periphery of the tire 2 of the vehicle. The first foam layer 11 is formed by the first foam body. The first foam body forming the first foam layer 11 is seamless with the second foam body included in the mixed layer 12. The first foam body and the second foam body are formed at the same time by the same resin composition, and are shaped such that the first foam body and the second foam body are continuous with each other. The mixed layer 12 includes the first non-woven fabric and the second foam body that is foamed inside the second non-woven fabric. In other words, the mixed layer 12 is a composite of the first non-woven fabric and the second foam body. The first foam layer 11 contains no non-woven fabric.

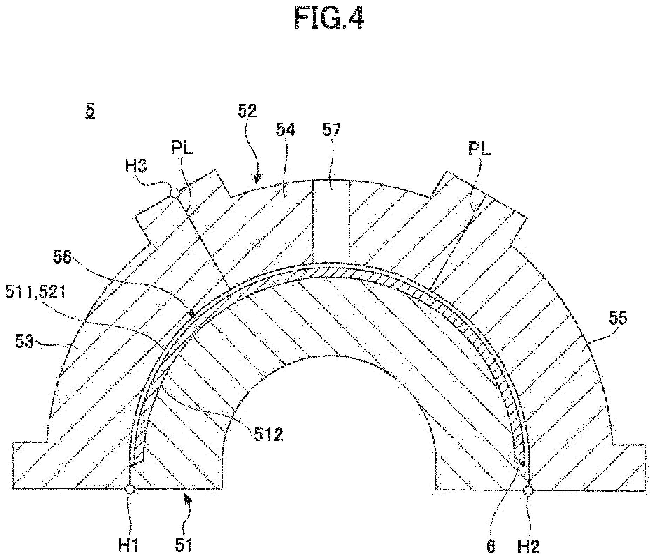

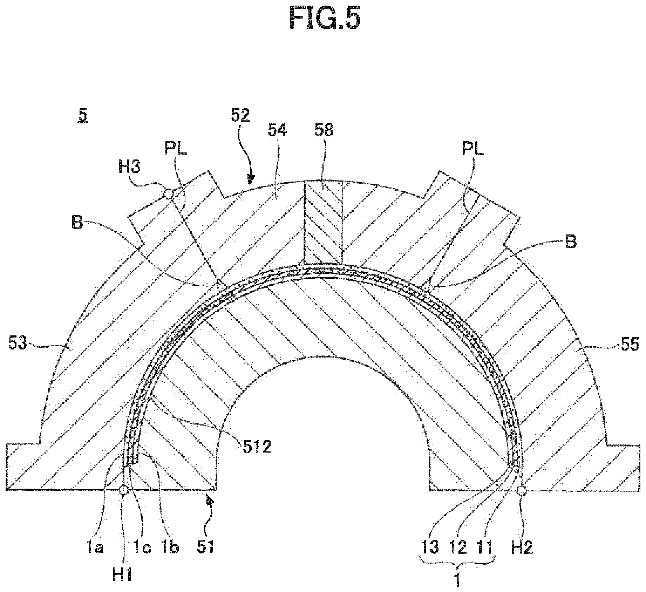

As illustrated in FIG. 2(A), the fender liner 1 may further include a non-woven fabric layer 13 on the mixed layer 12 opposite to where the first foam layer 11 is provided. The non-woven fabric layer 13 is formed by the second non-woven fabric that is seamless with the first non-woven fabric included in the mixed layer 12. The first non-woven fabric and the second non-woven fabric are originally a single non-woven fabric 6 (see FIG. 4 and FIG. 5). The portion of the non-woven fabric 6 impregnated with the resin composition is the first non-woven fabric, whereas the remaining portion of the non-woven fabric 6 not impregnated with the resin composition is the second non-woven fabric. The non-woven fabric layer 13 contains no foam body.

The fender liner 1 is obtained, as described further below, by injecting a resin composition into an inner space 56 of the shaping mold 5 illustrated in FIG. 4 and so on with the non-woven fabric 6 already installed in the inner space 56 of the shaping mold 5, impregnating the non-woven fabric 6 with the resin composition, foaming the resin composition, and solidifying the resin composition. The non-woven fabric 6 is impregnated with the resin composition from one side of the non-woven fabric 6 (upper surface, for example) to the opposite surface of the non-woven fabric 6 (lower surface, for example).

In a case where the resin composition impregnation stops partway in the non-woven fabric 6, the fender liner 1 illustrated in FIG. 2(A) is obtained. The fender liner 1 illustrated in FIG. 2(A) includes the first foam layer 11, the mixed layer 12, and the non-woven fabric layer 13 in this order. The fender liner 1 illustrated in FIG. 2(A) has excellent weather resistance because the non-woven fabric layer 13 facing the tire 2 does not contain foam.

In contrast to this, the fender liner 1 illustrated in FIG. 2(B) is obtained in a case where after the entirety of the non-woven fabric 6 is impregnated with the resin composition, the resin composition does not leak to the opposite side (bottom side, for example) of the non-woven fabric 6. The fender liner 1 illustrated in FIG. 2(B) includes the first foam layer 11 and the mixed layer 12. The fender liner 1 illustrated in FIG. 2(B) exhibits an excellent chipping-prevention effect because the mixed layer 12 that is higher in strength is placed closer to the tire 2 than the first foam layer 11 that is lower in strength is.

The fender liner 1 illustrated in FIG. 2(C) is obtained in a case where after the entirety of the non-woven fabric 6 is impregnated with the resin composition, and the resin composition leaks to the opposite side (bottom side, for example) of the non-woven fabric 6. The fender liner 1 illustrated in FIG. 2(C) includes the first foam layer 11, the mixed layer 12, and a second foam layer 14 in this order. The second foam layer 14 is placed on the mixed layer 12 opposite to where the first foam layer 11 is provided. Also, the second foam layer 14 is formed by a third foam body that is seamless with the second foam body of the mixed layer 12. The third foam body and the second foam body are shaped at the same time with the same resin composition, and are shaped such that the third foam body and the second foam body are continuous with each other. In the fender liner 1 illustrated in FIG. 2(C), the sound absorption coefficient is enhanced because sound is absorbed by the second foam layer 14 facing the tire 2.

The fender liner 1 includes at least the first foam layer 11 and the mixed layer 12. The mixed layer 12 is a composite of the non-woven fabric 6 and the foam body. Therefore, the mixed layer 12 has a high density and a high strength even in comparison with the non-woven fabric 6 prior to composite formation and even in comparison with the foam body prior to composite formation. According to the present embodiment, the first foam layer 11 can be reinforced by the mixed layer 12, and thus the strength of the fender liner 1 can be enhanced.

The fender liner 1 includes, for example, the first foam layer 11 on the mixed layer 12 opposite to where the tire 2 is provided. By placing the mixed layer 12 that is higher in strength closer to the tire 2 than the first foam layer 11 that is lower in strength is, breakage of the fender liner 1 can be substantially prevented. The breakage can be caused, for example, by the flaking of a film of ice.

Next, referring back to FIG. 2(A) to FIG. 2(C), the first foam layer 11 and the mixed layer 12 included in the fender liner 1 are described. The description of the non-woven fabric layer 13 is omitted because the second non-woven fabric forming the non-woven fabric layer 13 is configured in the same manner as the first non-woven fabric included in the mixed layer 12. Also, the description of the second foam layer 14 is omitted because the second foam layer 14 is configured in the same manner as the first foam layer 11.

First, the mixed layer 12 is described. The mixed layer 12 has a thickness of, for example, 0.15 mm to 5 mm. If the mixed layer 12 has a thickness of 0.15 mm or more, the strength of the fender liner 1 is sufficiently high. In addition, if the mixed layer 12 has a thickness of 5 mm or less, the thickness of the non-woven fabric 6 prior to composite formation is thin, and thus the non-woven fabric 6 can be easily manufactured. The thickness of the mixed layer 12 is preferably 0.7 mm to 4 mm.

The mixed layer 12 has a density that is four times to ten times, preferably five times to seven times, the density of the first foam layer 11, for example, from the standpoint of both strength and sound absorption performance. The density of the mixed layer 12, what is known as bulk density, is measured in compliance with Japanese Industrial Standard, JIS K 7222:2005 "Cellular plastics and rubbers -- Determination of apparent (bulk) density". The density of the mixed layer 12 is preferably 250 kg/m³ to 1,100 kg/m³.

The non-woven fabric 6 included in the mixed layer 12 is an aggregate of polyester (PEs) fibers, polyethylene (PE) fibers, polypropylene (PP) fibers, or the like. The non-woven fabric 6 may contain multiple types of fibers, for example, polyester fibers and rayon fibers. Specific examples of polyester fibers include polyethylene terephthalate (PET) fibers. The non-woven fabric 6 can be included in not only the mixed layer 12 but also the non-woven fabric layer 13.

Next, the first foam layer 11 is described. The first foam layer 11 has a three-dimensional net-shaped skeletal structure, unlike the non-woven fabric 6. The first foam layer 11 includes numerous bubbles inside. The numerous bubbles are connected to one another, and thus sound waves propagate inside the first foam layer 11. At such timing, air inside the first foam layer 11 vibrates. Friction occurs between the three-dimensional net-shaped skeletal structure of the first foam layer 11 and the air, and in turn, energy of the sound waves gets converted into thermal energy. As a result of this, the sound is absorbed. The noise level outside of the vehicle and the noise level inside of the vehicle can be decreased.

In contrast to conventional non-woven fabric 6 that includes fibers that are two-dimensionally oriented, the first foam layer 11 has a three-dimensionally extended net-shaped skeletal structure. Therefore, the first foam layer 11 can enhance the sound absorption coefficient in comparison to the non-woven fabric 6. Also, since the first foam layer 11 has the three-dimensionally extended net-shaped skeletal structure and is continuously connected, shape retention can be enhanced.

The first foam layer 11 is, for example, a polyurethane foam body. The polyurethane foam body is what is known as a polyurethane foam, and is obtained by foaming and solidifying a resin composition that includes a polyisocyanate, a polyol, a catalyst, and a foaming agent. The foaming agent includes water. The foaming agent may include chlorine. The details of the resin composition are described further below.

In the present embodiment, the first foam layer 11 is a foam body of polyurethane, but the first foam layer 11 may be a polyacrylic foam body, a melamine foam body, a rubber foam body, a polyolefin foam body, or a polyimide foam body. These materials including polyurethane are excellent in terms of lightness and shape retention.

From the standpoint of both lightness and sound absorption performance, the first foam layer 11 has a thickness of, for example, 3 mm to 25 mm, and preferably 3 mm to 20 mm.

From the standpoint of both lightness and sound absorption performance, the first foam layer 11 has a density of, for example, 20 kg/m³ to 140 kg/m³. The density of the first foam layer 11, what is known as bulk density, is measured in compliance with the Japanese Industrial Standard, JIS K 7222:2005 "Cellular plastics and rubbersDetermination of apparent (bulk) density". The density of the first foam layer 11 is preferably 30 kg/m³ to 130 kg/m³, and more preferably 55 kg/m³ to 120 kg/m³.

The sound absorption coefficient of the first foam layer 11 is, for example, 0.4 to 1.0. A sample having a thickness of 10 mm of the first foam layer 11 is cut and sound waves of 1,000 Hz are perpendicularly incident on the sample, and the sound absorption coefficient of the first foam layer 11 is measured in compliance with Japanese Industrial Standard, JIS A 1405-2:2007 "Determination of sound absorption coefficient and impedance in acoustic tubes". The sound absorption coefficient of the first foam layer 11 is preferably 0.5 to 1.0. A sound absorption coefficient of 1.0 means that none of the sound is reflected.

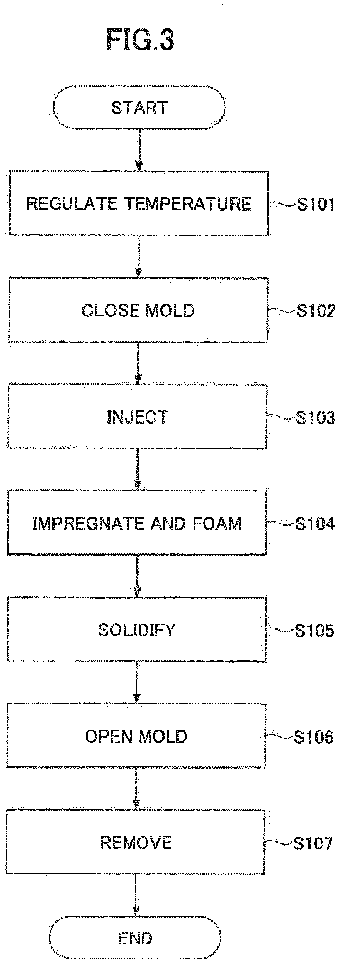

Next, a manufacturing method of the fender liner according to an embodiment is described with reference to FIG. 3. The manufacturing method of the fender liner 1 includes, for example, step S101 to step S107 in FIG. 3. In the present embodiment, the shaping mold 5 illustrated in FIG. 4 to FIG. 6 is used. The shaping mold 5 is a metal mold owing to the controllability. The shaping mold 5 may be a sand mold, a wooden mold, or a resin mold.

First, the shaping mold 5 is temperature regulated in step S101. The temperature regulation of the shaping mold 5 may be continued in subsequent steps. It is sufficient as long as temperature regulation (step S101) is started prior to injection (step S103). It is sufficient as long as the temperature of the shaping mold 5 is stabilized prior to injection (step S103).

The temperature of the shaping mold 5 is temperature regulated such that the temperature is 50 degrees Celsius to 70 degrees Celsius. The inside of the shaping mold 5 has formed therein a channel through which a temperature regulating medium such as water flows. It should be noted that an electric heater or the like may be embedded inside the shaping mold 5.

As long as the temperature of the shaping mold 5 is 50 degrees Celsius or more, the polymerization reaction and foaming reaction can advance. Further, as long as the temperature of the shaping mold 5 is 70 degrees Celsius or less, the reaction rate can be appropriately restrained, solidification can be mitigated such that solidification is not completed prior to the resin permeating the entirety of the inner space 56 of the shaping mold 5, and thus an occurrence of a phenomenon where there is insufficient filling, that is, a short-shot, can be mitigated.

It should be noted the temperature distribution of the shaping mold 5 may be uniform or may be non-uniform. In the case of the latter, the polymerization reaction and foaming reaction of the resin composition can be adjusted by the temperature difference.

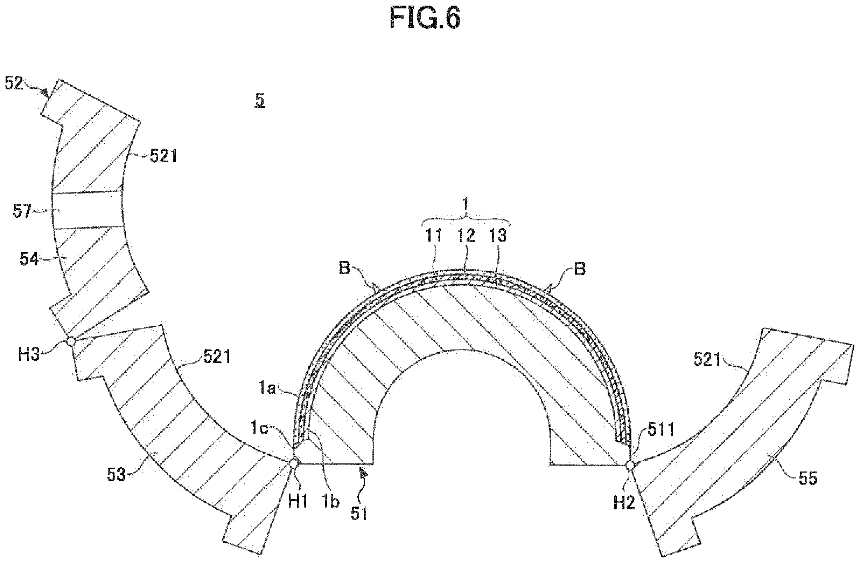

Next, in step S102, a lower mold 51 and an upper mold 52 constituting the shaping mold 5 are closed as illustrated in FIG. 4. Specifically, the shaping mold 5 is closed by moving the upper mold 52 from the open position (see FIG. 6) to the closed position (see FIG. 4).

Upon completion of the closing of the mold, the inner space 56 is formed between the lower mold 51 and the upper mold 52. The inner space 56 is a space in which the fender liner 1 is formed. In the inner space 56, the non-woven fabric 6 is installed prior to the closing of the mold.

The thickness of the non-woven fabric 6 is less than the thickness of the inner space 56. Therefore, a flow channel through which the resin composition flows is formed between the non-woven fabric 6 and the upper mold 52. The channel is formed along the entire upper surface of the non-woven fabric 6. The inside of the non-woven fabric 6 can be impregnated with the resin composition from the entire upper surface of the non-woven fabric 6.

The shaping mold 5 is parted into the lower mold 51 and the upper mold 52. The upper mold 52 is placed on top of the lower mold 51. The upper mold 52 is further parted into multiple parted molds 53 to 55. It should be noted that the lower mold 51 and the upper mold 52 are also parted molds of the shaping mold 5. These boundary lines of these parted molds are referred to as parting lines PL of the shaping mold 5.

The lower mold 51 is a fixed-type mold. The lower mold 51 has an upper surface 511 and a recess 512. The upper surface 511 protrudes upwardly. The recess 512 is formed in the upper surface 511. The recess 512 is formed to have a predetermined depth from the upper surface 511 of the lower mold 51. The non-woven fabric 6 is installed at the bottom of the recess 512.

In contrast to this, the upper mold 52 is a movable-type mold. The upper mold 52 has a lower surface 521. The lower surface 521 of the upper mold 52 comes into contact with the upper surface 511 of the lower mold 51. Although not illustrated, the lower surface of the upper mold 52 may be formed with a second recess, and a resin composition may be formed inside of the second recess. The thickness of the first foam layer 11 can be made to be thick at portions of the first foam layer 11. The number of the second recesses is one or more.

The upper mold 52 protrudes upwardly in an arch shape and is parted into three parted molds 53 to 55 in the circumferential direction of the upper mold 52. The parted molds 53 and 55 that are on both ends are linked to the lower mold 51 by different hinges H1 and H2, respectively. The parted mold 53 on one end rotates about hinge H1 and rotates between the closed position (see FIG. 4) and the open position (see FIG. 6). Also, the parted mold 55 on the other end rotates about hinge H2 and rotates between the closed position (see FIG. 4) and the open position (see FIG. 6).

The parted mold 54 in the middle is linked to one of the two parted molds 53 and 55 on both ends (for example, parted mold 53) by a hinge H3. The parted mold 54 in the middle rotates about hinge H3 and rotates between the closed position (see FIG. 4) and the open position (see FIG. 6) with respect to the parted mold 53 on one end.

Although the upper mold 52 is parted into three parted molds 53 to 55 in the present embodiment, the upper mold 52 may be parted into two parted molds or may be parted into four or more parted molds. The number of parts in the upper mold 52 is not particularly limited.

The upper mold 52 is parted into multiple parted molds 53 to 55 as described above. The multiple parted molds 53 to 55 may be moved individually, and the movement range of the upper mold 52 can be configured to be small in comparison to a case where the entirety of the upper mold 52 is moved at once.

Next, in step S103, a resin composition is injected from an injection opening 57 into the inner space 56 of the shaping mold 5 that was closed in step S102. The inner space 56 protrudes upwardly in an arch shape and the injection opening 57 is positioned immediately over the uppermost portion of the inner space 56. The resin composition, upon entering the inner space 56 from the injection opening 57, bifurcates and flows through the channel between the upper mold 52 and the non-woven fabric 6, due to gravity. After injection of the resin composition, a plug 58 is inserted into the injection opening 57 as illustrated in FIG. 5, and thus the injection opening 57 is sealed by the plug 58.

Next, in step S104, the non-woven fabric 6 is impregnated with the resin composition in the inner space 56 of the shaping mold 5 and then the resin composition is foamed inside the inner space 56 of the shaping mold 5. The inside of the non-woven fabric 6 is impregnated with the resin composition from the entire upper surface of the non-woven fabric 6. Impregnation and foaming may take place at the same time.

When the resin composition foams, gas is generated. The generated gas pushes the gas of the inner space 56 to the outside of the shaping mold 5 from the parting lines PL of the shaping mold 5. At such timing, the gas and the resin composition enters the parting line PL together with the gas, cools, and then hardens. This will cause what is known as burrs B to occur.

The parting lines PL of the present embodiment are not arranged on a facing surface 1b of the fender liner 1 facing the tire 2. Therefore, burrs B do not occur on the facing surface 1b of the fender liner 1 facing the tire 2. Hence, interference between burrs B and the tire 2 can be prevented. The burrs B forms on surface 1a of the fender liner 1 opposite to where the tire 2 is provided.

Next, in step S105, the foamed resin composition is solidified as illustrated in FIG. 5. The term solidification encompasses curing. The fender liner 1 equipped with the first foam layer 11, the mixed layer 12, and the non-woven fabric layer 13 in this order is obtained upon the solidification of the resin composition.

It should be noted that the fender liner 1 illustrated in FIG. 2(B) and FIG. 2(C) can also be obtained by adjusting the injection amount of the resin composition, the thickness of the non-woven fabric 6 prior to composite formation, the settings of the non-woven fabric 6 prior to composite formation, and the like.

Also, if the positioning of the shaping mold 5 is vertically inverted, the fender liner 1 having a laminate structure that is opposite to that of the fender liner 1 illustrated in FIG. 6 can be obtained. Even in the case where the positioning of the shaping mold 5 is vertically inverted, the injection opening 57 is provided above the inner space 56.

In any case, the fender liner 1 is formed to have the same shape and the same dimensions as the inner space 56 of the shaping mold 5.
Therefore, the fender liners 1 having the shape and the same dimensions can be mass produced.

Also, since the shape and dimensions of the fender liner 1 are determined by the shape and dimensions of the inner space 56 of the shaping mold 5, an intricate structure can also be imparted and downstream steps such as cutting or pressing are not necessary.

Furthermore, the number of processes can be reduced and the manufacturing costs of the fender liner 1 can be reduced compared with a case where the multiple layers included in the fender liner 1 are formed separately and then the multiple layers are bonded with adhesive or the like.

Next, in step S106, the lower mold 51 and the upper mold 52 are opened as illustrated in FIG. 6. Specifically, the shaping mold 5 is opened by moving the upper mold 52 from the closed position (see FIG. 4) to the open position (see FIG. 6).

Lastly, in step S107, the fender liner 1 is removed from the shaping mold 5 after the shaping mold 5 is opened. The fender liner 1 may include a tapered surface 1c that is tapered toward where the tire 2 is provided (radially inward toward the tire 2). The fender liner 1 readily separates from the lower mold 51 owing to the tapered surface 1c, and thus any damage during mold separation can be mitigated.

In a case where the fender liner 1 has excellent flexibility, the tapered surface 1c is not necessary. In such a case, the fender liner 1 deforms as the mold separation is performed.

The manufacturing method of the fender liner 1 may include steps other than step S101 to step S107 in FIG. 3. For example, the manufacturing method of the fender liner 1 may include a step of forming a water repellent layer on the facing surface 1b of the fender liner 1 facing the tire 2 after removing the fender liner 1 from the shaping mold 5.

The water repellent layer causes water droplets scattered by the tire 2 to readily slide off the water repellent layer. Therefore, water droplets are substantially prevented from remaining on the water repellent layer, and thus a film of ice is substantially prevented from forming. If a film of ice is prevented from getting formed, damage that would result from film of ice coming off does not occur. The water repellent layer is formed by, for example, fluorine based, silicone based, or low polarity hydrocarbon based coating agents such as polyethylene or polypropylene.

The water-repellent layer may be breathable. Compared with the case where the water-repellent layer is not breathable, sound waves such as the travel noise of the tire 2 readily enters the inside of the fender liner 1. Therefore, reflection of sound waves can be substantially prevented. The breathable water repellent layer is formed, for example, by a spray coating method.

Next, the resin composition that is the raw material of the foam body is described. The foam body forms the first foam layer 11 and is included in the mixed layer 12. The foam body may form not only the first foam layer 11 but also the second foam layer 14. In a case where the foam body is a polyurethane foam, the resin composition includes a polyisocyanate, a polyol, a catalyst, and a foaming agent. The resin composition may further include an additive. The resin composition is normally prepared by mixing a system liquid including a raw material other than a polyisocyanate together with a polyisocyanate.

The polyisocyanate may be, for example, tolylene diisocyanate (TDI), methylene diphenyl diisocyanate (MDI), polymethylene polyphenyl isocyanate (what is known as crude MDI), xylylene diisocyanate (XDI), isophorone diisocyanate (IPDI) or hexamethylene diisocyanate (HMDI), or may be a prepolymer type modified product, an isocyanurate modified product, a urea modified product, or a carbodiimide modified product of the above polyisocyanates although not limited thereto. The TDI may be 2,4-TDI, 2,6-TDI, or a mixture of both. MDI may be 2,2'-MDI, 2,4'-MDI, 4,4'-MDI, or a mixture of two or three of these types.

Examples of the polyols include polyoxyalkylene polyol, polyester polyol, and the like.

Examples of the foaming agent include water although not limited thereto. As an example of a foaming agent other than water, an inert compound with a low boiling point is preferable. Examples of such an inert compound include, for example, an inert gas and a saturated hydrocarbon having 8 or less carbons with a boiling point of 70 degrees Celsius or less in which hydrogens bonded to carbon may be substituted with a halogen element. The halogen atom is, for example, a fluorine atom or a chlorine atom. Examples of the saturated hydrocarbon include butane, pentane, cyclopentane, dichloromethane (methylene chloride), trichloroethane, and various chlorofluorocarbon compounds although not limited thereto. Also, one type of the foaming agent may be used individually or two or more types of the foaming agent may be used in combination.

The catalyst is at least one type selected from the group consisting of an amine catalyst and a tin catalyst. One type of the catalyst may be used individually or two or more types of the foaming agent may be used in combination. Examples of the amine catalyst include triethylenediamine; bis (2-dimethylaminoethyl) ether; N,N,N',N'-tetramethylhexamethylenediamine; N,N-dimethylaminoethoxyethoxy ethanol; N,N-dimethylamino-6-hexanol; N,N-dimethylaminoethoxy ethanol; a compound in which 2 mol of ethylene oxide is added to N,N-dimethylaminoethoxy ethanol; and 5-(N,N-dimethyl)amino-3-methyl-1-pentanol although not limited thereto. Examples of the tin catalyst include tin(II) 2-ethylhexanoate; di-n-butyltin oxide; di-n-butyltin dilaurate; di-n-butyltin diacetate; di-n-octyltin oxide; di-n-octyltin dilaurate; monobutyltin trichloride; di-n-butyltin dialkyl mercaptan; and di-n-octyltin dialkyl mercaptan although not limited thereto.

A foam stabilizer may be included as the additive. Examples of the foam stabilizer include a silicone foam stabilizer and a fluorinated compound foam stabilizer although not limited thereto. One type may be used individually or two or more types of the foaming stabilizer may be used in combination.

A crosslinking agent may be included as the additive. A compound having at least two active hydrogen-containing groups selected from hydroxyl groups, primary amino groups, and secondary amino groups may be selected. Examples of the crosslinking agent include ethylene glycol, propylene glycol, 1,4-butanediol, neopentyl glycol, 1,6-hexanediol, diethylene glycol, triethylene glycol, dipropylene glycol, glycerin, trimethylolpropane, pentaerythritol, diglycerin, monoethanolamine, diethanolamine, triethanolamine, bisphenol A, ethylenediamine, 3,5-diethyl-2,4-diaminotoluene, 3,5-diethyl-2,6-diaminotoluene, 2-chloro-p-phenylenediamine, 3,5-bis(methylthio)-2,4-diaminotoluene, 3,5-bis(methylthio)-2,6-diaminotoluene, 1-trifluoromethyl-3,5-diaminobenzene, 1-trifluoromethyl-4-chloro-3,5-diaminobenzene, 2,4-toluenediamine, 2,6-toluenediamine, bis(3,5-dimethyl-4-aminophenyl) methane, 4,4'-diaminodiphenylmethane, m-xylenediamine, 1,4-diaminohexane, 1,3-bis(aminomethyl)cyclohexane and isophorone diamine although not limited thereto. Also, the aforementioned polyoxyalkylene polyol with a molecular weight/number of hydroxyl groups that is less than 500 may also be used as the crosslinking agent. One type of the crosslinking agent may be used individually or two or more types of the crosslinking agent may be used in combination.

Examples of other additives include various publicly known additives and adjuvants such as emulsifiers, antioxidants, anti-aging agents such as ultraviolet absorbers, filling agents such as calcium carbonate, barium sulfate, and the like, plasticizers, colorants, flame retardants, antifungal agents, and foam breakers although not limited thereto. Additives conventionally used in polyurethane foams can be used.

### (Examples)

The experimental data is described below. Example 1 to Example 13 are Examples. In Example 1 to Example 13, the same component as the resin composition that is the material of the foam body was used. The resin composition was prepared by putting 109.3 parts by mass of system liquid and 39.3 parts by mass of polyisocyanate (mixture of TDI and MDI; Product name: Coronate 1021; manufactured by Tosoh) in a container and mixing the contents of the container together by a high-speed mixer at room temperature. The system liquid included 60 parts by mass of polyoxyalkylene polyol (Product name: EXCENOL 820; manufactured by AGC Inc.), 40 parts by mass of another polyoxyalkylene polyol (Product name: EXCENOL 923; manufactured by AGC Inc.), 3 parts by mass of water that is a foaming agent, 0.3 parts by mass of a catalyst (Product name: TEDA L-33; manufactured by Tosoh Corporation), 0.05 parts by mass of a catalyst (Product name: TOYOCAT-ET; manufactured by Tosoh Corporation) 3 parts by mass of foam stabilizer (Product name: Tegostab B8737LF2; manufactured by Evonik Industries, and 3 parts by mass of a crosslinking agent (Product name: EXCENOL 555; manufactured by AGC. Inc.).

The aforementioned resin composition was injected, foamed, and solidified without installing a non-woven fabric in advance inside the inner space of the shaping mold, and a test piece consisting of only the foam body was produced. The evaluation results of the test piece are indicated in Table 1.

**[TABLE 1]**

| | | |
|---|---|---|
| Foam body prior to composite formation | Thickness [mm] | 10 |
| | Tensile strength [N] | 29 |
| | Tensile stress [MPa] | 0.3 |
| | Surface density [g/m²] | 1,000 |
| | Density [kg/m³] | 100 |
| | 1 kHz sound absorption coefficient | 0.62 |

In Table 1, the tensile strength and the tensile stress of the test piece was measured by pulling the test piece in a longitudinal direction perpendicular to the thickness direction by using the tensile tester, Precision Universal Tensile Tester Autograph AG-X plus available from Shimadzu Corporation. Also, the density of the test piece, what is known as bulk density, was measured in compliance with Japanese Industrial Standard, JIS K 7222:2005 "Cellular plastics and rubbersDetermination of apparent (bulk) density". In Table 2 and Table 3, as well, which are described further below, the tensile strength, the tensile stress, and the density of the test piece were measured in the same manner as in Table 1.

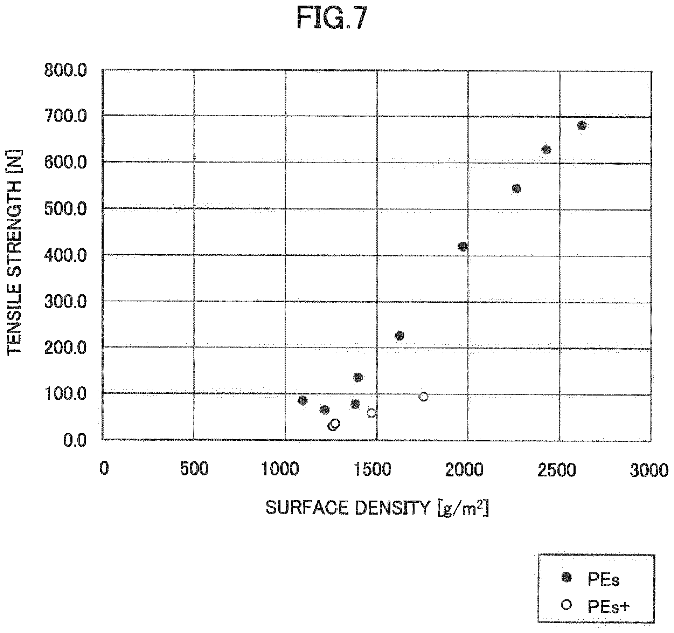

In Example 1 to Example 13, the aforementioned resin composition was injected, foamed, and solidified with the non-woven fabrics illustrated in Table 2 and Table 3 installed in advance inside the inner space of the shaping mold, and test pieces including the laminate were produced. The evaluation results of the test pieces are indicated in Table 2 and Table 3 as well as in FIG. 7 to FIG. 9.

**[TABLE 2]**

| | | Ex. 1 | Ex. 2 | Ex. 3 | Ex. 4 | Ex. 5 | Ex. 6 | Ex. 7 |
|---|---|---|---|---|---|---|---|---|
| Non-woven fabric prior to composite formation | Materials of fiber | PEs+ | PEs+ | PEs+ | PEs+ | PEs | PEs | PEs |
| | Thickness [mm] | 0.3 | 0.5 | 1 | 1.5 | 0.7 | 1.5 | 2.5 |
| | Tensile strength [N] | 5 | 10 | 27 | 29 | 43 | 79 | 171 |
| | Surface density [g/m²] | 55 | 85 | 180 | 260 | 140 | 225 | 400 |
| | Density [kg/m³] | 183 | 170 | 180 | 173 | 200 | 150 | 160 |
| Laminate after composite formation | Laminate structure | FIG. 2 (C) | FIG. 2 (B) | FIG. 2 (B) | FIG. 2 (B) | FIG. 2 (C) | FIG. 2 (C) | FIG. 2 (C) |
| | Thickness [mm] | 10 | 10 | 10 | 10 | 10 | 10 | 10 |
| | Tensile strength [N] | 30 | 36 | 59 | 94 | 136 | 226 | 420 |
| | Tensile stress [MPa] | 0.3 | 0.4 | 0. 6 | 0.9 | 1.4 | 2.3 | 4.2 |
| | Surface density [g/m²] | 1261 | 1275 | 1472 | 1758 | 1397 | 1626 | 1971 |
| | Density [kg/m³] | 126 | 127 | 147 | 176 | 140 | 163 | 197 |
| | Strength enhancement rate A [%] | 609 | 374 | 218 | 324 | 317 | 287 | 246 |
| | Strength enhancement rate B [%] | 104 | 122 | 202 | 321 | 463 | 770 | 1429 |
| | 1 kHz Sound absorption coefficient | 0.45 | 0.42 | 0.59 | 0.55 | 0.47 | 0.53 | 0.56 |
| | Mixed layer estimated density [kg/m³] | 971 | 649 | 572 | 606 | 667 | 518 | 489 |

**[TABLE 3]**

| | | Ex. 8 | Ex. 9 | Ex. 10 | Ex. 11 | Ex. 12 | Ex. 13 |
|---|---|---|---|---|---|---|---|
| Non-woven fabric prior to composite formation | Materials of fiber | PEs | PEs | PEs | PEs | PEs | PEs |
| | Thickness [mm] | 3 | 4 | 5 | 0.6 | 0.8 | 0.17 |
| | Tensile strength [N] | 309 | 361 | 503 | 28 | 29 | 13 |
| | Surface density [g/m²] | 500 | 670 | 830 | 70 | 90 | 75 |
| | Density [kg/m³] | 167 | 168 | 166 | 117 | 113 | 441 |
| Laminate after composite formation | Laminate structure | FIG. 2(C) | FIG. 2 (A) | FIG. 2 (A) | FIG. 2 (B) | FIG. 2 (B) | FIG. 2(C) |
| | Thickness [mm] | 10 | 10 | 10 | 10 | 10 | 10 |
| | Tensile strength [N] | 545 | 630 | 681 | 66 | 78 | 86 |
| | Tensile stress [MPa] | 5.5 | 6.3 | 6.8 | 0.7 | 0.8 | 0.9 |
| | Surface density [g/m²] | 2265 | 2429 | 2622 | 1216 | 1382 | 1095 |
| | Density [kg/m³] | 226 | 243 | 262 | 122 | 138 | 109 |
| | Strength enhancement rate A [%] | 176 | 174 | 136 | 235 | 269 | 672 |
| | Strength enhancement rate B [%] | 1854 | 2142 | 2317 | 224 | 264 | 291 |
| | 1 kHz Sound absorption coefficient | 0.50 | 0.56 | 0.48 | 0.56 | 0.64 | 0.64 |
| | Mixed layer estimated density [kg/m³] | 522 | 457 | 424 | 461 | 578 | 656 |

In Table 2 and Table 3, "PEs+" means that the non-woven fabric includes polyester fibers and rayon fibers. Also, "Strength enhancement rate A" represents the tensile strength of the laminate after composite formation relative to tensile strength of the non-woven fabric prior to composite formation, as a percentage. Also, "Strength enhancement rate B" represents the tensile strength of the laminate after composite formation with relative to the tensile strength of the foam body prior to composite formation, as a percentage.

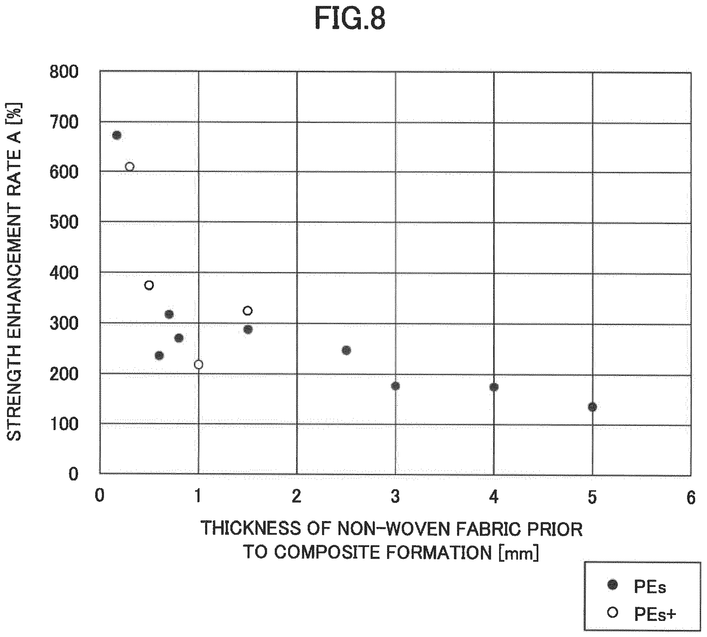

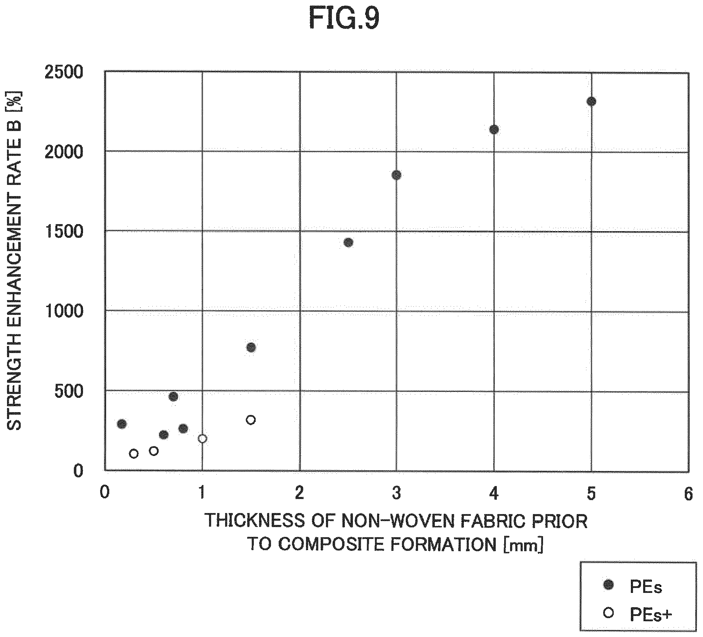

In Example 1 to Example 13, the composite is formed by impregnating the non-woven fabric with resin composition. Therefore, as evidenced in the Table 2 and Table 3 as well as FIG. 8 and FIG. 9, the tensile strength of the laminate after composite formation could be enhanced such that the tensile strength of the laminate is greater than the tensile strength of the foam body prior to composite formation and greater than the tensile strength of the non-woven fabric prior to composite formation.

As evidenced in FIG. 7, the tensile strength of the laminate after composite formation was found to have a tendency to be stronger, the greater the surface density of the laminate after composite formation. Also, as evidenced in FIG. 8, the thickness of the strength enhancement rate A was found to have a tendency to be smaller, the greater the thickness of the non-woven fabric prior to composite formation. Also, as evidenced in FIG. 9, the strength enhancement rate B was found to have a tendency to be greater, the greater the thickness of the non-woven fabric prior to composite formation.

One or more embodiments and the like of the fender liner, the manufacturing method of the fender liner, and the vehicle of the disclosure are described above. However, the disclosure is not limited to the embodiments and the like. Various modifications, changes, substitutions, additions, deletions, or any combination of embodiments can be made within the scope set forth in the disclosure.

The fender liner 1 may include a mesh instead of the non-woven fabric 6. In such a case, the mixed layer 12 includes a mesh and a foam body foamed inside the mesh. In other words, the mixed layer 12 is a composite of the mesh and the foam body.

The present application claims priority under Japanese Patent Application No. 2020-188140 filed on November 11, 2020, with the Japanese Patent Office, and the entire contents of Japanese Patent Application No. 2020-188140 are incorporated herein by reference.

### DESCRIPTION OF THE REFERENCE NUMERALS

- 1: Fender liner
- 2: Tire
- 11: First foam layer
- 12: Mixed layer

## Claims

1. A fender liner that is to be placed in a curved shape along a periphery of a tire of a vehicle, the fender liner comprising:
a first foam layer that is formed by a first foam body; and
a mixed layer that includes a first non-woven fabric and a second foam body that is foamed inside the first non-woven fabric,
wherein the first foam body forming the first foam layer is seamless with the second foam body included in the mixed layer.

2. The fender liner according to claim 1, further comprising a non-woven fabric layer on the mixed layer opposite to where the first foam layer is provided, the non-woven fabric layer being formed by a second non-woven fabric that is seamless with the first non-woven fabric of the mixed layer.

3. The fender liner according to claim 1, further comprising a second foam layer on the mixed layer opposite to where the first foam layer is provided, the second foam layer being formed by a third foam body that is seamless with the second foam body of the mixed layer.

4. The fender liner according to any one of claims 1 to 3, wherein the mixed layer has a thickness of 0.15 mm to 5 mm.

5. The fender liner according to any one of claims 1 to 4 wherein the mixed layer has a density four times to ten times a density of the first foam layer.

6. The fender liner according to any one of claims 1 to 5, wherein the first foam body forming the first foam layer is a polyurethane foam body, a polyacrylic foam body, a melamine foam body, a rubber foam body, a polyolefin foam body, or a polyimide foam body.

7. The fender liner according to any one of claims 1 to 6, wherein the first non-woven fabric included in the mixed layer includes polyester fibers, polyethylene fibers, or polypropylene fibers.

8. A fender liner manufacturing method of manufacturing the fender liner of any one of claims 1 to 7, the fender liner manufacturing method comprising:
injecting a resin composition into an inner space of a shaping mold with a non-woven fabric already installed in a portion of the inner space;
impregnating the non-woven fabric with the resin composition in the inner space of the shaping mold and foaming the resin composition in the inner space; and
solidifying the resin composition foamed inside the inner space of the shaping mold to form both the first foam layer and the mixed layer.

9. A vehicle, comprising:
a tire; and
the fender liner of any one of claims 1 to 7.

10. The vehicle according to claim 9, wherein the first foam layer 1 is provided on the mixed layer opposite to where the tire is provided.

11. The vehicle according to claim 9 or 10, further comprising a water repellent layer on a facing surface of the fender liner, the facing surface facing the tire.

12. The vehicle according to claim 11, wherein the water repellent layer is breathable.
